# FASCICULE DE BREVET EUROPEEN

(11) **EP 2 475 535 B1**
(45) Date de publication et mention de la délivrance du brevet: **09.10.2013**
(21) Numéro de dépôt: 10757279.4
(22) Date de dépôt: 03.09.2010
(51) Int. Cl.: B60C 17/04, B60C 17/06

(54) **DISPOSITIF DE ROULAGE A PLAT POUR VEHICULE AUTOMOBILE, ENSEMBLE MONTE L'INCORPORANT ET SON PROCEDE DE MONTAGE/ DEMONTAGE.**
NOTLAUFVORRICHTUNG FÜR EIN AUTO, MONTIERTE BAUGRUPPE DAMIT UND ZUGEHÖRIGES MONTAGE-/DEMONTAGEVERFAHREN
FLAT-RUNNING DEVICE FOR AN AUTOMOBILE, MOUNTED ASSEMBLY INCLUDING SAME AND RELATED MOUNTING/REMOVAL METHOD

(30) Priorité: 08.09.2009 FR 0904261
(43) Date de publication de la demande: 18.07.2012
(73) Titulaire: Hutchinson, 75008 Paris (FR)
(72) Inventeur: AUVRAY, Stéphane, 60140 Verderonne (FR); CARPENTIER, Eric, F-95660 Champagne Sur Oise (FR); CLEMENT, Patrick, F-60570 La Boissiere En Thelle (FR)
(74) Mandataire: Bolinches, Michel Jean-Marie
(86) Numéro de dépôt international: PCT/IB2010/053978
(87) Numéro de publication internationale: WO 2011/030269

(56) Documents cités:
- FR-A- 2 913 917
- US-A- 4 592 403
- US-A- 5 593 520
- US-A1- 2007 215 266

## Description

La présente invention concerne un dispositif de roulage à plat destiné à équiper un ensemble monté à jante monobloc et sans chambre à air pour véhicule automobile, un tel ensemble monté incorporant ce dispositif et permettant de parcourir une distance importante à vitesse relativement élevée lorsque l'ensemble monté est partiellement ou totalement dégonflé, ainsi qu'un procédé de montage et/ou de démontage de cet ensemble monté.

Pour une jante monobloc, les dispositifs de roulage à plat connus sont généralement constitués par un anneau rigide de soutien qui est monté serré autour d'une jante de roue à l'intérieur d'une enveloppe de pneumatique. Cet anneau est par exemple formé soit d'une seule pièce aux flancs relativement souples pouvant être continue ou bien d'une pièce souple ouverte (i.e. fendue, à laquelle on a retiré une tranche), soit d'au moins deux pièces rigides en arc de cercle ou secteurs.

Les documents FR-A1-2 755 905 et WO-A1-2008/132348 tous deux au nom de la Demanderesse présentent chacun un dispositif de roulage à plat pour une jante monobloc à creux de jante circonférentiel, de type à anneau pouvant être fendu et présentant, d'une part, une face de montage radialement interne apte à épouser le profil axial du creux de jante et, d'autre part, une face de soutien radialement externe destinée à soutenir l'enveloppe de pneumatique en roulage à plat.

De manière connue, le montage d'un tel ensemble monté se fait au moyen d'une machine de montage de pneumatiques entraînant en rotation l'ensemble jante - anneau de roulage à plat - enveloppe de pneumatique autour de l'axe de symétrie de la jante. Pendant ce montage, l'anneau fendu doit passer au-dessus des rebords latéraux ou « crochets » de la jante pour finalement venir se caler dans le creux de jante. Quant au démontage de l'anneau fendu vis-à-vis de la jante, il se fait à l'inverse en faisant basculer cet anneau hors du rebord de jante.

Un inconvénient majeur de ces étapes de montage/ démontage des dispositifs de roulage à plat à anneau fendu est que lors du montage, cet anneau ne tourne pas toujours en même que temps (i.e. de manière solidaire en rotation) que la jante et l'enveloppe de pneumatique ce qui peut rendre ce montage malaisé, et également que l'extraction de l'anneau hors des rebords de jante peut poser quelques difficultés.

Le document précité WO-A1-2008/132348 (ou son équivalent FR-A1-2 913 917) présente un dispositif selon le préambule de la revendication 1 annexée, mais qui est dépourvu de toute encoche pour permettre l'insertion transversale d'un levier entre la jante et l'anneau pour faciliter le montage et le démontage du dispositif sur la jante.

Le document US-A1-2007/0215266 divulgue un dispositif de roulage à plat comprenant un anneau dont la face interne montée sur la jante est plate et pourvue d'encoches radiales de faible hauteur qui ne sont pas adaptées à cette insertion d'un levier afin de monter/ démonter l'anneau d'un creux de jante, la jante de ce document étant à fond plat.

Un but de la présente invention est de proposer un dispositif de roulage à plat destiné à équiper un ensemble monté sans chambre à air pour véhicule automobile qui comprend une jante de roue monobloc à creux de jante circonférentiel et une enveloppe de pneumatique montée sur la jante, le dispositif étant destiné à soutenir l'enveloppe suite à une chute de pression de gonflage à l'intérieur de l'ensemble monté et permettant de remédier aux inconvénients précités. Ce dispositif comprend un anneau qui présente une face de montage radialement interne pour le dispositif destinée à épouser le profil axial du creux de jante, cette face de montage ayant deux portions latérales, l'anneau présentant une structure ouverte à deux extrémités maintenues en regard à proximité l'une de l'autre par des moyens de serrage de l'anneau.

A cet effet, un dispositif de roulage à plat selon l'invention est tel qu'au moins une encoche transversale dont les deux bords et le fond sont localisés en deçà de l'une des extrémités d'anneau est formée dans l'une au moins desdites portions latérales, laquelle forme une lèvre circonférentielle qui est axialement en saillie par rapport à la paroi latérale correspondante de l'anneau, cette lèvre présentant ladite au moins une encoche et étant adaptée pour caler l'anneau dans le creux de jante, de sorte à permettre via cette encoche l'insertion transversale d'un outil de type levier entre la jante et cette face de montage pour faciliter les opérations de montage et/ou de démontage du dispositif sur la jante.

Par « encoche », on entend ici une petite entaille servant de mise en butée de l'anneau contre la jante via l'insertion de cet outil, cette entaille étant par définition une coupure pratiquée sur cette portion latérale radialement interne de l'anneau avec enlèvement de matière, lequel est adapté pour que l'espacement entre les deux bords d'encoche corresponde sensiblement à la largeur de l'outil inséré entre ces bords.

Avantageusement, lesdits bords de ladite ou de chaque encoche ou entaille peuvent s'étendre sensiblement dans la direction axiale et ledit fond reliant ces bords entre eux peut s'étendre sensiblement dans la direction circonférentielle, de sorte que la ou chaque encoche présente sensiblement une forme de créneau de préférence trapézoïdal.

Selon un exemple de l'invention, ladite ou chaque encoche s'étend transversalement sur une partie seulement de la largeur axiale de ladite face de montage radialement interne, de sorte à y former un évidement à la fois transversal et radial pour la seule portion latérale de l'anneau formant ladite lèvre encochée.

Selon une variante de l'invention, ladite ou chaque encoche s'étend transversalement sur toute la largeur axiale de cette face de montage, de sorte à y former un évidement à la fois transversal et radial pour chacune des deux portions latérales de l'anneau.

On notera que cette variante à encoche axialement traversante présente l'avantage de faciliter encore l'opération de démontage du dispositif par l'insertion de l'outil de type levier.

Selon une autre caractéristique préférentielle de l'invention, ladite ou l'une au moins desdites encoches est située à proximité immédiate de l'une des extrémités de l'anneau, ce qui facilite encore les opérations de montage/ démontage précitées.

A titre encore plus préférentiel, le bord de cette encoche qui est proximal de l'une des extrémités de l'anneau est séparé de cette extrémité par un tronçon d'extrémité non entaillé de ladite portion latérale qui présente dans la direction circonférentielle une longueur inférieure à celle de cette encoche.

Selon une autre caractéristique de l'invention, l'anneau peut être formé d'un seul tenant, ladite au moins une lèvre étant crénelée par ladite ou chaque encoche et étant adaptée pour caler l'anneau dans ledit creux de jante en le montant en appui sur les deux parois latérales de ce creux.

Selon un mode de réalisation de l'invention, l'anneau peut présenter une face de soutien radialement externe qui est destinée à soutenir l'enveloppe en roulage à plat et qui définit ainsi le dispositif de roulage à plat selon l'invention, lequel est alors fendu d'un seul tenant. On notera qu'en variante cet anneau pourrait ne former qu'une partie radialement interne d'un dispositif de roulage à plat selon l'invention, dont une partie radialement externe assurerait alors le soutien de l'enveloppe et pourrait par exemple être constituée d'un autre anneau fendu.

Avantageusement, cet anneau peut être réalisé en un matériau plastique (par exemple à base d'un polymère thermoplastique, tel qu'un polyamide), un matériau élastomère (de préférence en un élastomère compact, i.e. non cellulaire, comme par exemple un caoutchouc usuel ou un élastomère thermoplastique) ou même un matériau composite, étant précisé que l'anneau doit être apte à amortir les chocs en roulage tant à l'état gonflé qu'à plat. De plus, cet anneau doit présenter, d'une part, suffisamment de souplesse pour pouvoir être monté sur la jante en passant au-dessus des rebords de jante après avoir été inséré à l'intérieur de l'enveloppe de pneumatique, et, d'autre part, suffisamment de rigidité pour être maintenu correctement positionné dans le fond du creux de jante lors du montage.

Selon une autre caractéristique de l'invention, cet anneau peut présenter au moins un renfoncement radial circonférentiel, et lesdits moyens de serrage de l'anneau peuvent comprendre au moins une ceinture annulaire de serrage qui enserre circonférentiellement l'anneau en ce renfoncement (cette ceinture étant radialement en retrait par rapport à ladite face de soutien) et qui est pourvue d'une connectique de serrage et de verrouillage, de sorte à rapprocher lesdites extrémités d'anneau l'une de l'autre et à maintenir l'anneau sensiblement au contact de la jante en roulage.

On notera que ce montage de la ou de chaque ceinture de serrage en retrait de la face de soutien de l'anneau permet notamment de maintenir cet anneau sur la jante en s'opposant efficacement au phénomène de « centrifugation » de l'anneau en roulage à l'état gonflé, tout en protégeant la ou chaque ceinture en faisant en sorte qu'elle n'interfère pas avec l'enveloppe de pneumatique en roulage à plat.

Avantageusement, l'anneau peut présenter, vu en section axiale, sensiblement une forme de U qui définit ce renfoncement en forme de gorge recevant la ceinture de serrage, laquelle peut comprendre un collier métallique serré et verrouillé de préférence par une vis montée dans des tourillons. On notera que ce collier ou ceinture métallique doit être suffisamment flexible pour être facilement insérable à l'intérieur de l'enveloppe de pneumatique, et sensiblement indéformable vis-à-vis des efforts transmis en roulage une fois la ceinture verrouillée, pour s'opposer efficacement à la « centrifugation » précitée.

En variante, la ou chaque ceinture de serrage pourrait être de type sangle fermée en tissu de diamètre ajustable, par exemple.

On notera également que le mécanisme de serrage de la ou de chaque ceinture peut être mis en oeuvre tant dans le plan de la roue que, plus avantageusement, selon un axe perpendiculaire à ce plan (ce qui est moins contraignant pour le montage).

On notera en outre que ledit anneau peut être avantageusement pourvu d'un lien élastique annulaire sur le fond du ou de chaque renfoncement, ce lien élastique étant destiné à maintenir l'anneau dans le creux de jante et étant surmonté par la ceinture de serrage.

Un ensemble monté sans chambre à air pour véhicule automobile selon l'invention comprend une jante de roue monobloc à creux de jante circonférentiel, une enveloppe de pneumatique montée contre des rebords axialement interne et externe de la jante et un dispositif de roulage à plat monté sur la jante et destiné à soutenir l'enveloppe suite à une chute de pression de gonflage à l'intérieur de l'ensemble monté, et il est caractérisé en ce que le dispositif est tel que défini ci-dessus.

Selon une autre caractéristique de l'invention, ladite face de montage radialement interne de l'anneau peut être montée en appui dans ce creux de jante par ladite portion latérale formant une lèvre circonférentielle crénelée par ladite ou chaque encoche.

Un procédé de montage et/ou de démontage d'un dispositif de roulage à plat tel que défini ci-dessus sur une jante de roue monobloc à deux rebords axialement interne et externe, comprend l'insertion d'un outil de type levier radialement entre ledit creux de jante et ladite face de montage radialement interne de l'anneau à l'emplacement de ladite ou de l'une au moins desdites encoche(s) :
- lors du montage du dispositif et de l'enveloppe l'entourant sur la jante pour, grâce à cet outil ainsi inséré, bloquer ce dispositif sur la jante de sorte à le faire basculer par-dessus les rebords de jante et à le rendre solidaire en rotation de la jante et de l'enveloppe dans ce creux de jante lors de l'entraînement en rotation par une machine de montage de l'ensemble monté autour de l'axe de la jante, et/ou
- lors du démontage du dispositif hors de la jante pour, grâce à cet outil ainsi inséré, faciliter la sortie du dispositif hors du creux de jante et son basculement au-delà du rebord de jante correspondant de sorte à améliorer son extraction de la jante.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue en perspective d'un anneau inclus dans un dispositif de roulage à plat selon un exemple de l'invention, montrant une encoche transversale formée dans cet anneau,
la figure 2 est une vue en perspective de l'anneau selon l'invention de la figure 1 sous un autre angle, montrant par en dessous les bords et le fond de cette encoche,
la figure 3 est une vue en demi-coupe axiale suivant le plan III-III de la figure 1 d'un dispositif de roulage à plat selon l'invention monté sur une jante monobloc et comprenant l'anneau de cette figure 1 et une ceinture annulaire de serrage appliquée sur cet anneau,
la figure 4 est une vue en demi-coupe axiale suivant le plan IV-IV de la figure 1 du dispositif de roulage à plat selon la figure 3 monté sur la même jante monobloc,
la figure 5 est une vue en perspective du dispositif de roulage à plat selon les figures 3 et 4 qui est monté sur la même jante monobloc et qui illustre des moyens de serrage et de verrouillage de la ceinture et l'insertion d'un levier entre la jante et l'anneau via l'encoche de ce dernier,
la figure 6 est une vue en demi-coupe axiale suivant le plan VI-VI de la figure 5 de ce dispositif de roulage monté sur la jante avec ce levier inséré entre la jante et l'anneau, et
la figure 7 est une vue en perspective d'un anneau inclus dans un dispositif de roulage à plat selon une variante de l'invention par rapport à la figure 2, montrant par en dessous les bords et le fond d'une encoche transversale d'un autre type formée dans cet anneau.

Dans la présente description, les expressions « axialement interne » et « axialement externe » se réfèrent respectivement aux côtés de la jante de roue destinés à être tournés vers l'intérieur et vers l'extérieur du véhicule automobile, et les expressions « radialement interne » et « radialement externe » se réfèrent respectivement à des directions radiales par rapport à la jante qui se rapprochent et s'éloignent de celle-ci.

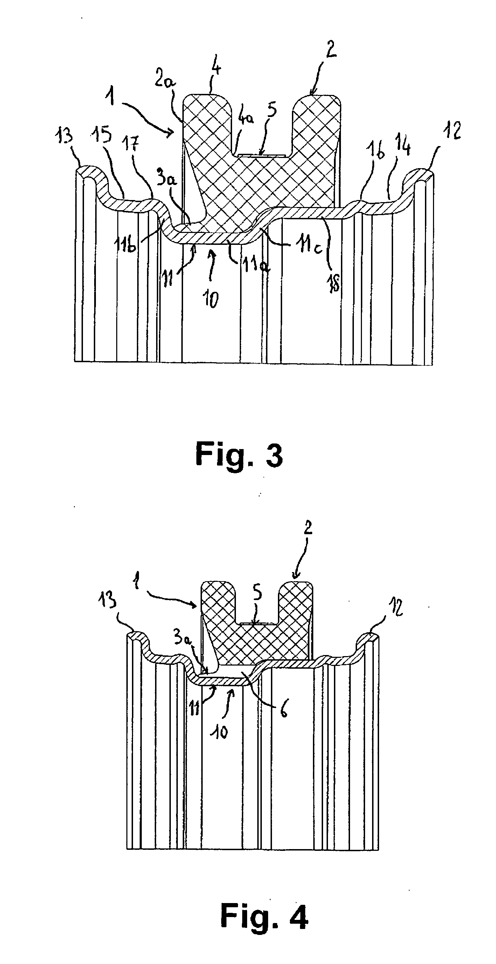

Le dispositif de roulage à plat 1 illustré aux figures 3 à 6 est monté sur une jante de roue 10 asymétrique de type monobloc comportant un creux de jante 11 circonférentiel, une enveloppe de pneumatique (non illustrée) étant montée contre des rebords axialement interne et externe 12 et 13 de la jante 10.

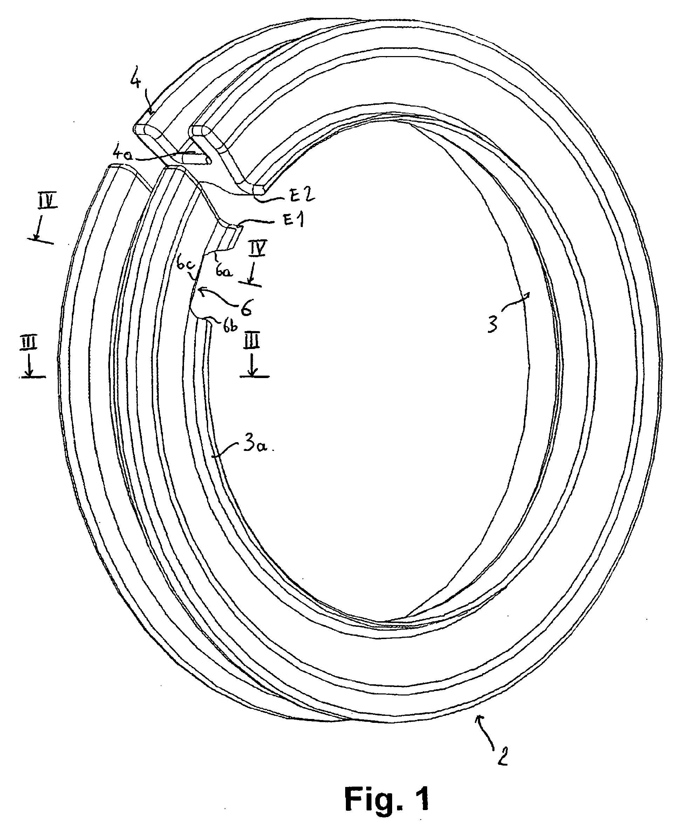

La jante 10 comporte des sièges de jante axialement interne et externe 14 et 15 respectivement destinés à recevoir des talons de l'enveloppe, chaque siège de jante 14, 15 étant délimité axialement par l'un des rebords 12, 13 et, dans l'exemple de la figure 1, par un bossage circonférentiel 16, 17 adjacent. Dans cet exemple de réalisation, le creux de jante 11 est de type à fond 11a plat et à parois latérales 11 b et 11 c sensiblement radiales. Plus précisément, on voit sur ces figures 3 à 6 que la paroi latérale 11 c adjacente au siège interne 14 est reliée à ce dernier par une portée 18 axiale.

Le dispositif 1 comprend essentiellement un anneau 2 adapté pour être positionné sur le fond 11 a du creux 11 et au contact de ses deux parois latérales 11b et 11c par une face de montage 3 radialement interne de l'anneau 2, et celui-ci est destiné à soutenir l'enveloppe suite à une chute de pression de gonflage à l'intérieur de l'ensemble monté par une face de soutien radialement externe 4 de cet anneau 2.

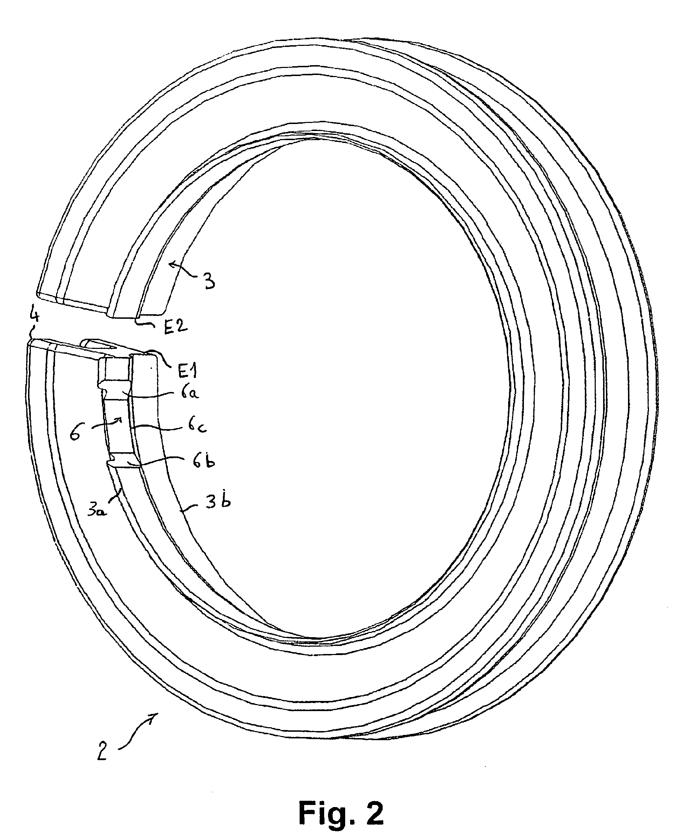

Comme visible aux figures 1 et 2, l'anneau 2 présente une structure monobloc en matériau élastomère, plastique ou composite, qui est sensiblement en forme de U dans cet exemple de réalisation et qui est ouvert (i.e. fendu en une tranche axiale) de sorte à présenter deux extrémités circonférentielles E1 et E2 disposées en regard l'une de l'autre.

Cet anneau 2 présente essentiellement :
- la face de soutien 4 dans laquelle est formée une gorge circonférentielle 4a qui est définie par la base du U, dont la profondeur est relativement importante par rapport à la hauteur radiale de l'anneau 2 et qui est surmontée d'une ceinture de serrage 5 de l'anneau 2 autour de la jante 10,
- la face de montage 3 conçue pour épouser le profil axial du creux 11 via une lèvre axiale circonférentielle 3a définissant une portion latérale de cette face 3, cette lèvre 3a étant apte à caler l'anneau 2 dans le creux de jante 11 et étant formée axialement en saillie par rapport à la face latérale axialement externe 2a de l'anneau 2.

Comme illustré à la figure 3, cette lèvre de calage 3a qui est formée d'un seul tenant avec le reste de l'anneau 2 est conçue pour être appliquée tant sur le fond 11 a du creux 11 que contre les deux parois latérales 11 b et 11 c de ce dernier. Quant au reste de la face de montage 3 de l'anneau 2, il présente une surface globalement plate qui se termine par une portion latérale 3b opposée à la lèvre 3a et qui est conçue pour être montée au contact de la portée 18 de la jante 10 adjacente au creux 11.

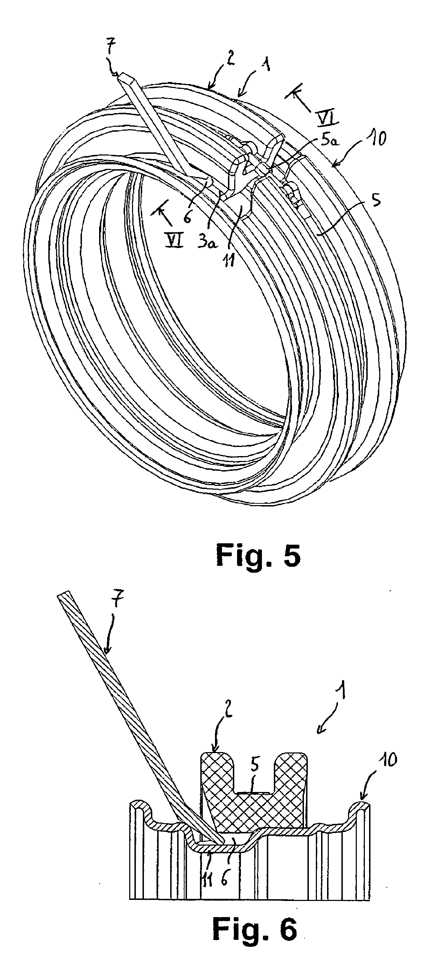

On voit aux figures 1 et 2 que l'encoche transversale 6 qui est formée dans cette lèvre 3a a ses deux bords 6a et 6b qui s'étendent sensiblement dans la direction axiale, et son fond 6c qui s'étend sensiblement dans la direction circonférentielle, étant précisé que l'encoche 6 est intégralement située en deçà de l'une des extrémités E1 de l'anneau 2 et, dans cet exemple préférentiel, à proximité immédiate de cette extrémité E1. Cette encoche 6 présente ainsi sensiblement une forme de créneau par exemple en forme de trapèze isocèle, dont la largeur du fond 6c formant la petite base du trapèze correspond sensiblement à celle du levier 7 à insérer entre la jante 10 et la face de montage 3 de l'anneau 2 (voir figure 5). Comme illustré à la figure 2, cette encoche 6 est découpée sur toute la hauteur radiale de la lèvre 3a ainsi rendue discontinue, ce qui revient à dire que chacun des bords 6a, 6b de l'encoche 6 est bidimensionnel.

Comme visible aux figures 3 à 6, le dispositif de roulage à plat 1 selon cet exemple de l'invention comprend, à titre de ceinture de serrage 5 de l'anneau 2 autour de la jante 10, un collier métallique ouvert qui est appliqué sur la gorge 4a et dont les extrémités en regard sont reliées entre elles par une connectique 5a à serrage réglable et verrouillable par exemple via une vis s'engageant dans des tourillon, de sorte à rapprocher suffisamment l'une de l'autre les deux extrémités E1 et E2 de l'anneau 2.

Pour procéder au montage du dispositif de roulage à plat 1 dans l'ensemble monté correspondant, avant gonflage et équilibrage de ce dernier, en commence par insérer à l'intérieur de l'enveloppe de pneumatique le dispositif de roulage à plat 1 formé de l'anneau 2 équipé de la ceinture 5 en position non serrée. Puis on fait passer sur la jante 10 un premier talon de l'enveloppe contenant ce dispositif 1, avant de procéder au serrage de l'anneau 2 contre la jante 10 par la connectique 5a.

On entraîne en rotation pendant le montage l'ensemble monté autour de l'axe de la jante 10 via une machine de montage, pour que l'anneau 2 bascule au-dessus des rebords de jante 12, 13 pour finalement venir se caler dans le creux de jante 11 par sa face de montage 3. Dans ce but et pour permettre à l'anneau 2 d'être solidaire en rotation de la jante 10 et de l'enveloppe, on insère le levier 7 entre le creux 11 et cet anneau 2 au niveau de l'encoche 6, ce qui a pour effet de bloquer l'anneau 2 contre la jante 10. L'étape finale du montage consiste à faire passer le second talon de l'enveloppe sur la jante 10.

Pour procéder au démontage du dispositif de roulage à plat 1 hors de la jante 10, il suffit d'insérer dans les mêmes conditions le levier 7 au niveau de l'encoche 6 entre le creux de jante 11 et l'anneau 2, lequel bascule alors aisément autour du rebord de jante correspondant 12, 13 et peut être facilement extrait de la jante 10.

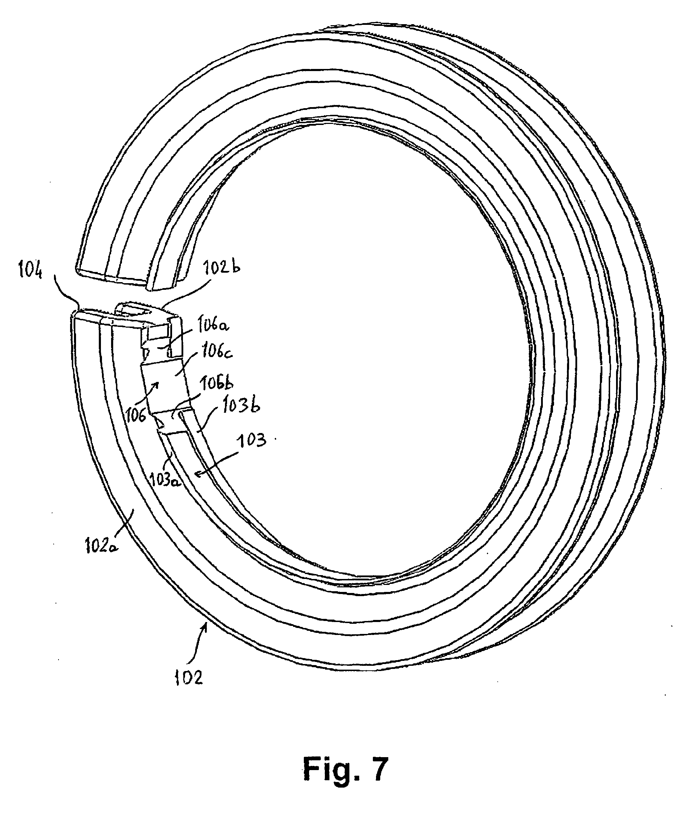

L'anneau 102 illustré à la variante de la figure 7 se différencie uniquement de celui de la figure 2, en ce que l'encoche 106 qu'il présente en sa face de montage radialement interne 103 s'étend transversalement sur toute la largeur axiale de cette face 103 en y formant un évidement à la fois transversal et radial commun aux deux portions latérales 103a et 103b de l'anneau 102 (i.e à la lèvre encochée 103a et à la portion latérale opposée 103b). on voit en effet à la figure 7 que les bords radiaux 106a et 106b de l'encoche 106 - reliés entre eux par un fond 106c - débouchent sur les deux parois latérales 102a et 102b de l'anneau 102, rendant ainsi l'encoche 106 axialement traversante par rapport à ce dernier.

Du fait de cette largeur axiale augmentée pour l'encoche 106 en comparaison de l'encoche 6, le démontage de la jante 10 du dispositif à anneau 102 et à ceinture 5 serrée par la connectique 5a est encore facilité par l'insertion du levier précité.

D'une manière générale, on notera qu'un dispositif de roulage à plat selon l'invention par exemple de type à anneau 2 ou 102 pourrait comporter une connectique de serrage et de verrouillage autre que celle 5a illustrée à la figure 5. On peut par exemple utiliser pour une telle connectique celle présentée dans la Demande de Brevet FR 0901520 au nom de la Demanderesse, i.e. intégrée à une ceinture de serrage présentant une paire d'extrémités espacées l'une de l'autre dans la direction circonférentielle, des moyens de raccordement de cette paire d'extrémités entre elles avec un serrage réglable dans cette direction, et un organe de verrouillage de ces moyens de raccordement. Cette ceinture est telle que l'organe de verrouillage est monté solidaire de l'une de ces extrémités de sorte à occuper une position de déverrouillage où il est dégagé de ces moyens de raccordement pour le serrage et desserrage de la ceinture, et une position de verrouillage où il vient en prise avec eux de sorte à s'opposer à ce desserrage.

Ces moyens de raccordement sont aptes à rapprocher ou à éloigner ces extrémités l'une de l'autre par une rotation appliquée à ces moyens respectivement dans le sens d'un serrage ou desserrage de la ceinture, et l'organe de verrouillage est alors adapté pour s'opposer à la rotation de ces moyens dans la position de verrouillage. Ces moyens de raccordement peuvent comprendre au moins une tige cylindrique présentant en ses portions terminales respectives deux filetages en sens opposés qui sont guidés en rotation dans deux premier et second tourillons transversaux fixés aux extrémités à raccorder, sous la commande d'un organe de manoeuvre de la tige solidaire en rotation d'une portion centrale de celle-ci, l'organe de verrouillage pouvant être alors monté pivotant sur le premier tourillon de sorte à coopérer en butée avec l'organe de manoeuvre dans la position de verrouillage.

Avantageusement, l'organe de verrouillage peut être alors formé d'une chape articulée présentant deux ailes qui sont montées pivotantes sur ledit premier tourillon en s'étendant latéralement de part et d'autre de ce dernier et qui se terminent par un tronçon de verrouillage conçu pour entourer étroitement l'organe de manoeuvre dans la position de verrouillage de sorte à l'empêcher de tourner. Encore plus avantageusement, cet organe de manoeuvre peut présenter une forme d'écrou à plusieurs pans, par exemple à six pans, ledit tronçon de verrouillage pouvant alors présenter une section transversale sensiblement en U renversé agencée pour être monté au contact de l'organe de manoeuvre en position de verrouillage, latéralement par les ailes du U et en le surmontant par l'âme de ce U.

## Revendications

1. Dispositif de roulage à plat (1) destiné à équiper un ensemble monté sans chambre à air pour véhicule automobile qui comprend une jante de roue (10) monobloc à creux de jante (11) circonférentiel et une enveloppe de pneumatique montée sur la jante, le dispositif étant destiné à soutenir l'enveloppe suite à une chute de pression de gonflage à l'intérieur de l'ensemble monté, ce dispositif comprenant un anneau (2, 102) qui présente une face de montage (3, 103) radialement interne pour le dispositif destinée à épouser le profil axial du creux de jante, cette face de montage ayant deux portions latérales (3a et 3b, 103a et 103b), l'anneau présentant une structure ouverte à deux extrémités (E1 et E2) maintenues en regard à proximité l'une de l'autre par des moyens de serrage (5) de l'anneau, **caractérisé en ce qu'**au moins une encoche transversale (6, 106) dont les deux bords (6a et 6b, 106a et 106b) et le fond (6c, 106c) sont localisés en deçà de l'une des extrémités d'anneau est formée dans l'une au moins desdites portions latérales (3a, 103a), laquelle forme une lèvre circonférentielle qui est axialement en saillie par rapport à la paroi latérale correspondante (2a, 102a) de l'anneau, qui présente ladite au moins une encoche et qui est adaptée pour caler l'anneau dans le creux de jante, de sorte à permettre via cette encoche l'insertion transversale d'un outil (7) de type levier entre la jante et cette face de montage pour faciliter les opérations de montage et/ou de démontage du dispositif sur la jante.

2. Dispositif de roulage à plat (1) selon la revendication 1, **caractérisé en ce que** lesdits bords (6a et 6b, 106a et 106b) de ladite ou de chaque encoche (6, 106) s'étendent sensiblement dans la direction axiale et **en ce que** ledit fond (6c, 106c) reliant ces bords entre eux s'étend sensiblement dans la direction circonférentielle, de sorte que la ou chaque encoche présente sensiblement une forme de créneau de préférence trapézoïdal.

3. Dispositif de roulage à plat (1) selon la revendication 1 ou 2, **caractérisé en ce que** ladite ou chaque encoche (6) s'étend transversalement sur une partie seulement de la largeur axiale de ladite face de montage (3) radialement interne, de sorte à y former un évidement à la fois transversal et radial pour la seule portion latérale (3a) de l'anneau (2) formant ladite lèvre encochée.

4. Dispositif de roulage à plat (1) selon la revendication 1 ou 2, **caractérisé en ce que** ladite ou chaque encoche (106) s'étend transversalement sur toute la largeur axiale de ladite face de montage (103) radialement interne, de sorte à y former un évidement à la fois transversal et radial pour chacune des deux portions latérales (103a et 103b) de l'anneau (102).

5. Dispositif de roulage à plat (1) selon une des revendications précédentes, **caractérisé en ce que** ladite ou l'une au moins desdites encoches (6, 106) est située à proximité immédiate de l'une des extrémités (E1) de l'anneau (2, 102).

6. Dispositif de roulage à plat (1) selon la revendication 5, **caractérisé en ce que** le bord (6a, 106a) de cette encoche (6, 106) qui est proximal de l'une des extrémités (E1) de l'anneau (2, 102) est séparé de cette extrémité par un tronçon d'extrémité non entaillé de ladite portion latérale (3a, 103a) qui présente dans la direction circonférentielle une longueur inférieure à celle de cette encoche.

7. Dispositif de roulage à plat (1) selon une des revendications précédentes, **caractérisé en ce que** l'anneau (2, 102) est formé d'un seul tenant, ladite au moins une lèvre (3a, 103a) étant crénelée par ladite ou chaque encoche (6, 106) et étant adaptée pour caler l'anneau dans ledit creux de jante (11) en le montant en appui sur les parois latérales (11b et 11c) de ce creux.

8. Dispositif de roulage à plat (1) selon la revendication 7, **caractérisé en ce que** l'anneau (2, 102) présente une face de soutien (4, 104) radialement externe qui est destinée à soutenir l'enveloppe en roulage à plat, cet anneau étant de préférence réalisé en un matériau plastique, élastomère ou composite.

9. Dispositif de roulage à plat (1) selon la revendication 8, **caractérisé en ce que** l'anneau (2, 102) présente au moins un renfoncement radial circonférentiel (4a) et **en ce que** lesdits moyens de serrage de l'anneau comprennent au moins une ceinture annulaire de serrage (5) qui enserre circonférentiellement l'anneau en ce renfoncement et qui est pourvue d'une connectique de serrage et de verrouillage (5a), de sorte à rapprocher lesdites extrémités d'anneau (E1 et E2) l'une de l'autre et à maintenir l'anneau sensiblement au contact de la jante (10) en roulage.

10. Dispositif de roulage à plat (1) selon la revendication 9, **caractérisé en ce que** l'anneau (2, 102) présente, vu en section axiale, sensiblement une forme de U qui définit ledit renfoncement (4a) en forme de gorge recevant ladite ceinture de serrage (5), laquelle comprend un collier métallique serré et verrouillé de préférence par une vis (5a) montée dans des tourillons.

11. Ensemble monté sans chambre à air pour véhicule automobile, comprenant une jante de roue (10) monobloc à creux de jante (11) circonférentiel, une enveloppe de pneumatique montée contre des rebords (12 et 13) axialement interne et externe de la jante et un dispositif de roulage à plat (1) monté sur la jante et destiné à soutenir l'enveloppe suite à une chute de pression de gonflage à l'intérieur de l'ensemble monté, **caractérisé en ce que** le dispositif est tel que défini à l'une des revendications précédentes.

12. Ensemble monté selon la revendication 11, **caractérisé en ce que** ladite face de montage (3, 103) radialement interne de l'anneau (2, 102) est montée en appui dans ce creux de jante (11) par ladite portion latérale (3a, 103a) formant une lèvre circonférentielle crénelée par ladite ou chaque encoche (6, 106).

13. Procédé de montage et/ou de démontage d'un dispositif de roulage à plat (1) selon une des revendications 1 à 10 sur une jante de roue (10) monobloc à deux rebords (12 et 13) axialement interne et externe, **caractérisé en ce qu'**il comprend l'insertion d'un outil (7) de type levier radialement entre ledit creux de jante (11) et ladite face de montage (3, 103) radialement interne de l'anneau (2, 102) à l'emplacement de ladite ou de l'une au moins desdites encoche(s) (6, 106) :
- lors du montage du dispositif et de l'enveloppe l'entourant sur la jante pour, grâce à cet outil ainsi inséré, bloquer ce dispositif sur la jante de sorte à le faire basculer par-dessus les rebords de jante et à le rendre solidaire en rotation de la jante et de l'enveloppe dans ce creux de jante lors de l'entraînement en rotation par une machine de montage de l'ensemble monté autour de l'axe de la jante, et/ou
- lors du démontage du dispositif hors de la jante pour, grâce à cet outil ainsi inséré, faciliter la sortie du dispositif hors du creux de jante et son basculement au-delà du rebord de jante correspondant de sorte à améliorer son extraction de la jante.

## Patentansprüche

1. Notlaufvorrichtung (1), die dazu bestimmt ist, eine montierte Baugruppe ohne Luftkammer für Kraftfahrzeuge auszustatten, die eine massive Radfelge (10) mit einem Umfangshohlraum der Felge (11) und einen Reifenmantel, der an der Felge montiert ist, aufweist, wobei die Vorrichtung dazu bestimmt ist, den Mantel in Folge eines Abfalls des Aufblassdrucks im Inneren der montierten Baugruppe zu stützen, wobei diese Vorrichtung einen Ring (2, 102) aufweist, der eine radial innere Montagefläche (3, 103) für die Vorrichtung, die dazu bestimmt ist, sich an das Axialprofil des Felgenhohlraums anzupassen, hat, wobei diese Montagefläche zwei Seitenabschnitte (3a und 3b, 103a und 103b) hat, wobei der Ring eine Struktur aufweist, die an zwei Enden (E1 und E2) offen ist, die in der Nähe zueinander durch eine Spannvorrichtung (5) des Rings gegenüber gehalten werden, **dadurch gekennzeichnet, dass** zumindest eine Quernut (6, 106), deren zwei Kanten (6a und 6b, 106a und 106b) und Boden (6c, 106c) diesseits von einem der Enden des Rings angeordnet sind, in zumindest einem der Seitenabschnitte (3a, 103a) ausgebildet ist, wobei dieser eine Umfangslippe bildet, die in Bezug auf die entsprechende Seitenwand (2a, 102a) des Rings axial vorsteht, die zumindest eine Nut aufweist, und die angepasst ist, den Ring in dem Felgenhohlraum abzustützen, und zwar in der Weise, dass über die Nut das Quereinführen eines Werkzeugs (7) vom Hebeltyp zwischen die Felge und diese Montagefläche gestattet wird, damit die Montage- und/oder Demontagevorgänge der Vorrichtung an der Felge erleichtert werden.

2. Notlaufvorrichtung (1) nach Anspruch 1, **dadurch gekennzeichnet, dass** sich die Kanten (6a und 6b, 106a und 1 06b) der Nut oder von jeder Nut (6, 10) im Wesentlichen in Axialrichtung erstrecken und dass sich der Boden (6c, 106c), der diese Kanten untereinander verbindet, im Wesentlichen in der Umfangsrichtung erstreckt, und zwar in der Weise, dass die oder jede Nut im Wesentlichen die Form einer vorzugsweise trapezförmigen Lücke aufweist.

3. Notlaufvorrichtung (1) nach Anspruch 1 oder 2, **dadurch gekennzeichnet, dass** sich die oder jede Nut (6) quer über einen Teil nur der Axialbreite der radial inneren Montagefläche (3) erstreckt, und zwar in der Weise, dass dort eine Aussparung zugleich quer und radial für den einzigen Seitenabschnitt (3a) des Rings (2) die ausgesparte Nut bildend ausgebildet wird.

4. Notlaufvorrichtung (1) nach Anspruch 1 oder 2, **dadurch gekennzeichnet, dass** sich die oder jede Nut (106) quer über die gesamte Axialbreite der radial inneren Montagefläche (3) erstreckt, und zwar in der Weise, dass dort eine Aussparung zugleich quer und radial für jeden der zwei Seitenabschnitte (103a und 103b) des Rings (102) ausgebildet wird.

5. Notlaufvorrichtung (1) nach einem der vorhergehenden Ansprüche, **dadurch gekennzeichnet, dass** die Nut oder zumindest eine der Nuten (6, 106) in unmittelbarer Nähe von einem der Enden (E1) des Rings (2, 102) angeordnet ist.

6. Notlaufvorrichtung (1) nach Anspruch 5, **dadurch gekennzeichnet, dass** die Kante (6a, 106a) dieser Nut (6, 106), die nahe von einem der Enden (E1) des Rings (2, 102) ist, von diesem Ende durch einen nicht geschlitzten Endabschnitt des Seitenabschnitts (3a, 103a) getrennt ist, der in der Umfangsrichtung eine Länge aufweist, die kleiner als die von dieser Nut ist.

7. Notlaufvorrichtung (1) nach einem der vorhergehenden Ansprüche, **dadurch gekennzeichnet, dass** der Ring (2, 102) von einem einzigen Träger gebildet wird, wobei zumindest eine Lippe (3a, 103a) durch die Nut oder jede Nut (6, 106) mit einer Lücke versehen ist und angepasst ist, den Ring in dem Hohlraum der Felge (11) abzustützen, indem dieser auf die Seitenwänden (11b und 11c) von diesem Hohlraum drückend montiert wird.

8. Notlaufvorrichtung (1) nach Anspruch 7, **dadurch gekennzeichnet, dass** der Ring (2, 102) eine radial äußere Stützfläche (4, 104) aufweist, die dazu bestimmt ist, den Mantel beim Notlauf zu stützen, wobei dieser Ring vorzugsweise aus einem Plastikmaterial, Elastomer oder Verbundwerkstoff umgesetzt ist.

9. Notlaufvorrichtung (1) nach Anspruch 8, **dadurch gekennzeichnet, dass** der Ring (2, 102) zumindest eine radiale umfängliche Vertiefung (4a) aufweist und dass die Spannvorrichtung des Rings zumindest einen ringförmigen Spanngürtel (5) aufweist, der in Umfangsrichtung den Ring in dieser Vertiefung umschließt und der mit einer Spann- und Verriegelungs-Verbindungseinrichtung (5a) versehen ist, und zwar in der Weise, dass die Ringenden (E1 und E2) aneinander angenähert werden und dass der Ring im Wesentlichen in Kontakt mit der Felge (10) beim Laufen gehalten wird.

10. Notlaufvorrichtung (1) nach Anspruch 9, **dadurch gekennzeichnet, dass** der Ring (2, 102) im Axialschnitt im Wesentlichen eine U-Form aufweist, die die Vertiefung (4a) in Form einer Rille definiert, die den Spanngürtel (5) aufnimmt, der ein Metallband aufweist, das vorzugsweise durch eine Schraube (5a), die in Zapfen montiert ist, gespannt und verriegelt ist.

11. Montierte Baugruppe ohne Luftkammer für Kraftfahrzeuge, die eine massive Radfelge (10) mit einem Umfangshohlraum der Felge (11), einen Reifenmantel, der gegen axial innere und äußere Felgenflanken (12 und 13) montiert ist, und eine Notlaufvorrichtung (1) aufweist, die auf der Felge montiert ist und dazu bestimmt ist, in Folge eines Abfalls des Aufblasdrucks im Inneren der montierten Baugruppe den Mantel zu stützen, **dadurch gekennzeichnet, dass** die Vorrichtung eine ist, die in einem der vorhergehenden Ansprüche definiert ist.

12. Montierte Baugruppe nach Anspruch 11, **dadurch gekennzeichnet, dass** die radial innere Montagefläche (3, 103) des Rings (2, 102) in diesen Hohlraum der Felge (11) drückend durch diesen Seitenabschnitt (3a, 103a) montiert ist, der eine Lippe bildet, die durch die oder jede Nut (6, 106) in Umfangsrichtung eine Lücke aufweist.

13. Verfahren zum Montieren und/oder Demontieren einer Notlaufvorrichtung (1) nach einem der Ansprüche 1 bis 10 an einer massiven Radfelge (10) mit zwei, axial inneren und äußere, Flanken, **dadurch gekennzeichnet, dass** dieses das Einführen eines Werkzeugs (7) vom Hebeltyp radial zwischen den Hohlraum der Felge (11) und die radial innere Montagefläche (3, 102) des Rings (2, 102) an der Stelle von der Nut oder von zumindest einer der Nuten (6, 106) aufweist:
bei der Montage der Vorrichtung und des diese umgebenden Mantels auf der Felge, damit aufgrund dieses somit eingeführten Werkzeugs diese Vorrichtung auf der Felge in der Weise blockiert wird, dass diese über die Felgenflanken von oben geklappt wird und diese rotationsfest mit der Felge und dem Mantel in diesem Hohlraum der Felge gestaltet wird, wenn ein Rotationsantrieb durch eine Montagemaschine der montierten Baugruppe um die Achse der Felge erfolgt, und/oder
bei der Demontage der Vorrichtung von der Felge, damit aufgrund dieses somit eingeführten Werkzeugs das Herausgehen der Vorrichtung aus dem Hohlraum der Felge und ihr Klappen über die entsprechende Felgenflanke hinweg in der Weise erleichtert wird, dass ihr Entfernen aus der Felge verbessert wird.

## Claims

1. A run-flat device (1) designed to be fitted to a tubeless mounted assembly for a motor vehicle which comprises a one-piece wheel rim (10) with a circumferential rim well (11) and a tire mounted on the rim, the device being designed to support the tire following a drop of inflation pressure inside the mounted assembly, this device comprising a ring (2, 102) which has a mounting face (3, 103) that is radially internal to the device and designed to espouse the axial profile of the rim well, this mounting face having two lateral portions (3a and 3b, 103a and 103b), the ring having an open structure with two ends (E1 and E2) held facing one another close together by ring-clamping means (5), **characterized in that** at least one transverse notch (6, 106), the two edges (6a and 6b, 106a and 106b) and bottom (6c, 106c) of which are located short of one of the ring ends, is formed in at least one of said lateral portions (3a, 103a), which lateral portion(s) form(s) a circumferential lip that projects axially with respect to the corresponding side wall (2a, 102a) of the ring, that exhibits said at least one notch and that is configured to wedge the ring in the rim well, so as to allow a lever-type tool (7) to be inserted transversely via this notch between the rim and this mounting face to assist with the operations of mounting the device on the rim and/or removing it therefrom.

2. The run-flat device (1) as claimed in claim 1, **characterized in that** said edges (6a and 6b, 106a and 106b) of said or of each notch (6, 106) run substantially in the axial direction, and **in that** said bottom (6c, 106c) connecting these edges together runs substantially in the circumferential direction, so that the or each notch is substantially in the shape of a crenel, preferably a trapezoidal crenel.

3. The run-flat device (1) as claimed in claim 1 or 2, **characterized in that** said or each notch (6) runs transversely over just part of the axial width of said radially internal mounting face (3) so as at that location to form a recess that is both transverse and radial for only that lateral portion (3a) of the ring (2) that forms said notched lip.

4. The run-flat device (1) as claimed in claim 1 or 2, **characterized in that** said or each notch (106) runs transversely over the entire axial width of said radially internal mounting face (103) so as at that location to form a recess that is both transverse and radial for each of the two lateral portions (103a and 103b) of the ring (102).

5. The run-flat device (1) as claimed in one of the preceding claims, **characterized in that** said or at least one of said notches (6, 106) is situated in the immediate vicinity of one of the ends (E1) of the ring (2, 102).

6. The run-flat device (1) as claimed in claim 5, **characterized in that** that edge (6a, 106a) of that notch (6, 106) which is adjacent to one of the ends (E1) of the ring (2, 102) is separated from that end by a non-nicked end section of said lateral portion (3a, 103a) which in the circumferential direction is of a length shorter than that of this notch.

7. The run-flat device (1) as claimed in one of the preceding claims, **characterized in that** the ring (2, 102) is formed as a single piece, said at least one lip (3a, 103a) being crenellated by said or each notch (6, 106) and configured to wedge the ring in said rim well (11) via its being mounted pressing against the side walls (11b and 11c) of this well.

8. The run-flat device (1) as claimed in claim 7, **characterized in that** the ring (2, 102) has a radially external support face (4, 104) which is designed to support the tire under run-flat conditions, this ring preferably being made of a plastic, elastomer or composite.

9. The run-flat device (1) as claimed in claim 8, **characterized in that** the ring (2, 102) exhibits at least one circumferential radial indentation (4a), and **in that** said ring-clamping means comprise at least one annular clamping band (5) which circumferentially encircles the ring at this indentation, and which is provided with a clamping and locking connector system (5a), so as to bring said ring ends (E1 and E2) closer to one another and keep the ring substantially in contact with the rim (10) under running conditions.

10. The run-flat device (1) as claimed in claim 9, **characterized in that**, when viewed in axial section, the ring (2, 102) is substantially in the shape of a U defining said indentation (4a) in the form of a groove accommodating said clamping band (5), which comprises a metal collar which is clamped and locked preferably by a screw (5a) mounted in journals.

11. A tubeless mounted assembly for a motor vehicle, comprising a one-piece wheel rim (10) with a circumferential rim well (11), a tire mounted against axially internal and external flanges (12 and 13) of the rim and a run-flat device (1) mounted on the rim and designed to support the tire following a drop in inflation pressure inside the mounted assembly, **characterized in that** the device is as defined in one of the preceding claims.

12. The mounted assembly as claimed in claim 11, **characterized in that** said radially internal mounting face (3, 103) of the ring (2, 102) is mounted pressing against this rim well (11) by said circumferential-lip-forming lateral portion (3a, 103a) crenellated by said or each notch (6, 106).

13. A method of mounting a run-flat device (1) as claimed in one of claims 1 to 10 on a one-piece wheel rim (10) with two, axially internal and external, flanges (12 and 13) and/or of removing it therefrom, **characterized in that** it comprises inserting a lever-type tool (7) radially between said rim well (11) and said radially internal mounting face (3, 103) of the ring (2, 102) at the location of said or of at least one of said notch(es) (6, 106):
- when mounting the device and the surrounding tire on the rim in order, thanks to this tool inserted in this way, to immobilize this device on the rim so as to lever it over the rim flanges and ensure that it rotates as one with the rim and with the tire in this rim well when a machine for assembling the mounted assembly is turning it about the axis of the rim; and/or
- when the device is being removed from the rim so as, thanks to this tool inserted in this way, to assist with extracting the device from the rim well and with levering it beyond the corresponding rim flange to make it easier to take it off the rim.
